Europäisches Patentamt

European Patent Office

Office européen des brevets

(19)

(11) **EP 0 598 197 B1**

(12) **EUROPÄISCHE PATENTSCHRIFT**

(45) Veröffentlichungstag und Bekanntmachung des Hinweises auf die Patenterteilung:
**19.11.1997 Patentblatt 1997/47**

(51) Int Cl.⁶: **H02M 3/335**

(21) Anmeldenummer: 93114875.3

(22) Anmeldetag: 15.09.1993

(54) **Sperrwandler-Schaltnetzteil mit sinusförmiger Stromaufnahme**

Blocking oscillator switched power supply with sinusoidal current consumption

Alimentation en courant commuté de convertisseur à oscillateur bloqué avec consommation de courant sinusoidal

(84) Benannte Vertragsstaaten:
**DE ES FR GB IT**

(30) Priorität: **17.11.1992 DE 4238808**

(43) Veröffentlichungstag der Anmeldung:
**25.05.1994 Patentblatt 1994/21**

(73) Patentinhaber: **SIEMENS AKTIENGESELLSCHAFT**
**80333 München (DE)**

(72) Erfinder: **Preller, Peter**
**D-81243 München (DE)**

(56) Entgegenhaltungen:
**EP-A- 0 464 240       WO-A-92/02983**
**DE-A- 4 008 652       DE-A- 4 131 240**

## Beschreibung

Die Erfindung betrifft ein Sperrwandler-Schaltnetzteil zur sinusförmigen Stromaufnahme nach den Merkmalen des Oberbegriffs des Anspruchs 1.

Für den Vertragsstaat Großbritannien wurde im Hinblick auf die ältere Anmeldung GB-A-2 261 331 ein gesonderter Satz Patentansprüche vorgesehen.

Schaltnetzteile sind hochfrequente Störquellen, die der Funkentstörung bedürfen. Werden Schaltnetzteile von einer gleichzurichtenden Netzwechselspannung versorgt, so entstehen auf dem Versorgungsnetz Oberwellenströme, die unerwünscht sind und in Zukunft durch die Verschärfung der Grenzwerte der zulässigen Oberwellenströme von den Energieversorgungsunternehmen nicht mehr akzeptiert werden. Eine sinusförmige Stromaufnahme der Schaltnetzteile wird deshalb angestrebt.

Während die Funkentstörung bisher bei Schaltnetzteilen im wesentlichen durch stromkompensierte Drosseln gut funktionierte, blieben die von den Schaltnetzteilen verursachten Oberwellenströme auf dem Netz unbeachtet. Da die Verschärfung der Grenzwerte der zulässigen Oberwellenströme auch für Schaltnetzteile in nachrichtentechnischen Geräten, wie beispielsweise Fernsehgeräten gilt, ist es notwendig, die Oberwellenströme zu reduzieren. Dies kann nur durch eine sinusförmige Stromaufnahme des Schaltnetzteiles gelöst werden.

Sperrwandler-Schaltnetzteile mit sinusförmiger Stromaufnahme sind bereits beschrieben worden. So wird in der EP 0 464 240 Al zur sinusförmigen Stromaufnahme des Schaltnetzteiles vorgeschlagen, an die Primärwicklung eines Transformators eine von einem Brückengleichrichter gleichgerichtete und ungeglättete Wechselspannung über ein Halbleiterschaltelement taktweise anzulegen. Angesteuert wird das Halbleiterschaltelement durch eine Steuereinrichtung nach Maßgabe mindestens eines an eine erste Eingangsklemme der Steuereinrichtung anzulegenden Primärstromsignales. Dieses Primärstromsignal wird dabei über eine an den Brückengleichrichter geschaltete Einweggleichrichteranordnung mit nachgeschaltetem RC-Glied bereitgestellt.

Ein in der deutschen Offenlegungsschrift DE 40 08 652 gezeigtes Schaltnetzteil weist einen Ladekondensator auf, der im Zusammenwirken mit einer Induktivität und einem Diodennetzwerk dafür sorgt, daß kurzzeitige Absenkungen oder Ausfälle der Netzwechselspannung ausgeglichen werden. Hierzu wird der Kondensator aufgeladen, wenn das Schaltelement ausgeschaltet ist, und entladen, wenn das Schaltelement leitend ist.

Der vorliegenden Erfindung liegt die Aufgabe zugrunde, eine andere Möglichkeit anzugeben, wie in Sperrwandler-Schaltnetzteilen mit einfachen Mitteln eine sinusförmige Stromaufnahme erreicht werden kann.

Diese Aufgabe wird gelöst durch ein Sperrwandler-Schaltnetzteil nach den Merkmalen des Patentanspruchs 1.

Weiterbildungen der Erfindung sind Gegenstand von Unteransprüchen.

Die erfindungsgemäße Strompumpe weist eine kapazitive Einrichtung und eine Gleichrichteranordnung auf, wobei die Gleichrichteranordnung zwischen einen Ausgang des eingangsseitigen Brückengleichrichters des Schaltnetzteils und eine Klemme des Glättungskondensators so geschaltet ist, daß der Glättungskondensator aufgeladen wird. Die kapazitive Einrichtung wird zwischen dem Brückengleichrichter und einem Abgriff, gemäß einer ersten Ausführungsform vorzugsweise dem Mittenabgriff, der Primärwicklung des Transformators verbunden.

Gemäß einer zweiten Ausführungsform ist vorgesehen, daß zwischen den Ausgang des Brückengleichrichters und den ihm zugewandten Klemmen der kapazitiven Einrichtung und der Gleichrichteranordnung eine Drossel eingefügt ist. Die kapazitive Einrichtung wird zwischen dem Brückengleichrichter und einem Abgriff der Primärwicklung des Transformators angeschlossen. Der Abgriff liegt vorzugsweise außerhalb der Anschlüsse für die gleichgerichtete, geglättete Wechselspannung der Primärwicklung. Die Stromaufnahme aus dem Netz erfolgt hier während der gesamten Einschaltphase und abhängig von der Momentanphase der Netzspannung teilweise während der Ausschaltphase des Halbleiterschaltelementes.

Wird beispielsweise als kapazitive Einrichtung lediglich ein Kondensator und als Gleichrichteranordnung eine Diode verwendet, so hat sich herausgestellt, daß diese Schaltungsanordnung auch zur Bedämpfung von Überschwingen beim Ein- und Ausschalten des Halbleiterschaltelementes wirksam eingesetzt werden kann. Damit kann mit der erfindungsgemäßen Strompumpe auf die sonst bei Schaltnetzteilen übliche Bedämpfungsschaltung, auch "Snubber-Schaltung" genannt, verzichtet werden. Bei den bekannten Sperrwandler-Schaltnetzteilen bestand diese Bedämpfungsschaltung regelmäßig aus einer Diode, einem Kondensator und einem Widerstand, wie z.B. der Siemens-Produktinformation "Funktion und Anwendung des Sperrwandler-IC TDA 4605", Bestell-Nr. B111-B6090 im Bild 25 zu entnehmen ist (vgl. dort R6, C5 und V5). Durch die erfindungsgemäße Schaltungsanordnung mit nur einem Kondensator und einer Diode kann der dafür notwendige Bauelementaufwand um einen Widerstand reduziert werden.

Die Wirkung der erfindungsgemäßen Strompumpe kann durch die Dimensionierung der kapazitiven Einrichtung und der Wahl des Abgriffes an der Primärwicklung beliebig zwischen einer vollen Wirkung und keiner Wirkung eingestellt werden. Durch die Wahl der Stelle des Abgriffs wird der Spannungshub an der mit der Gleichrichteranordnung verbundenen Klemme der kapazitiven Einrichtung festgelegt. Dieser kann geringer sein als der Spannungshub am Halbleiterschaltelement, wenn die kapazitive Einrichtung an einem Abgriff zwischen den Anschlüssen der Primärwicklung für die getaktete und gleichgerichtete Wechselspannung liegt. Der Spannungshub an der genannten Klemme der kapazitiven Einrichtung liegt in der Größenordnung des Spannungshubs am Halbleiterschaltelement, wenn der Abgriff mit dem für das Halbleiterschaltelement vorgesehenen Anschluß der Primärwicklung zusammenfällt. Unter Berücksichtigung von parasitären Wirkungen der Bauelemente ist es vorteilhaft, zur Erzielung eines in etwa gleich großen Spannungshubs den Abgriff zum Anschluß der kapazitiven Einrichtung an die Primärwicklung außerhalb deren Anschlüsse für die Spannungszuführung zu legen.

Bei der ersten Ausführungsform wird das Windungsverhältnis der Primärwicklung zur Sekundärwicklung des Transformators vorzugsweise so gewählt, daß die am Halbleiterschaltelement abfallende Lastspannung $U_D$ - üblicherweise bei MOS-Transistoren deren Drainspannung - stets die 0-Volt-Linie erreicht, bevor das Halbleiterschaltelement wieder eingeschaltet wird. Andernfalls würden Restladungen, die in der erfindungsgemäßen kapazitiven Einrichtung und einem parallel zur Laststrecke des Halbleiterschaltelementes geschalteten Kondensators vorhanden sind, durch das Halbleiterschaltelement fließen und diesen unnötig erwärmen.

Das erfindungsgemäße Sperrwandler-Schaltnetzteil weist folgende Vorteile auf:

- eine geringe Brummspannung an der sekundärseitigen Ausgangsspannung,
- wegen weicherer Schaltflanken und geringeren Überschwingern eine geringere Störstrahlung im Hochfrequenzbereich,
- eine Bedämpfungsschaltung für Überschwinger kann entfallen, da durch die Strompumpe Überschwinger bedämpft und deren Energie zurückgewonnen wird, und
- geringer Schaltungsaufwand.

Die Erfindung wird im folgenden anhand von vier Figuren näher erläutert. Es zeigen:

Figur 1    ein Prinzipschaltbild einer ersten Ausführungsform eines Sperrwandler-Schaltnetzteils mit sinusförmiger Stromaufnahme nach der Erfindung,

Figur 2    Strom- und Spannungsverläufe im Sperrwandler-Schaltnetzteil nach Figur 1,

Figur 3    Strom- und Spannungsverläufe in zeitlicher Dehnung zu Figur 2,

Figur 4    ein detailliertes Schaltbild eines Sperrwandler-Schaltnetzteils mit einer Strompumpe nach der ersten Ausführungsform der Erfindung,

Figur 5    ein Prinzipschaltbild einer zweiten Ausführungsform eines Sperrwandler-Schaltnetzteils mit sinusförmiger Stromaufnahme nach der Erfindung,

Figur 6    Strom- und Spannungsverläufe im Sperrwandler-Schaltnetzteil nach Figur 5 und

Figur 7    eine Weiterbildung eines Sperrwandler-Schaltnetzteils der zweiten Ausführungsform.

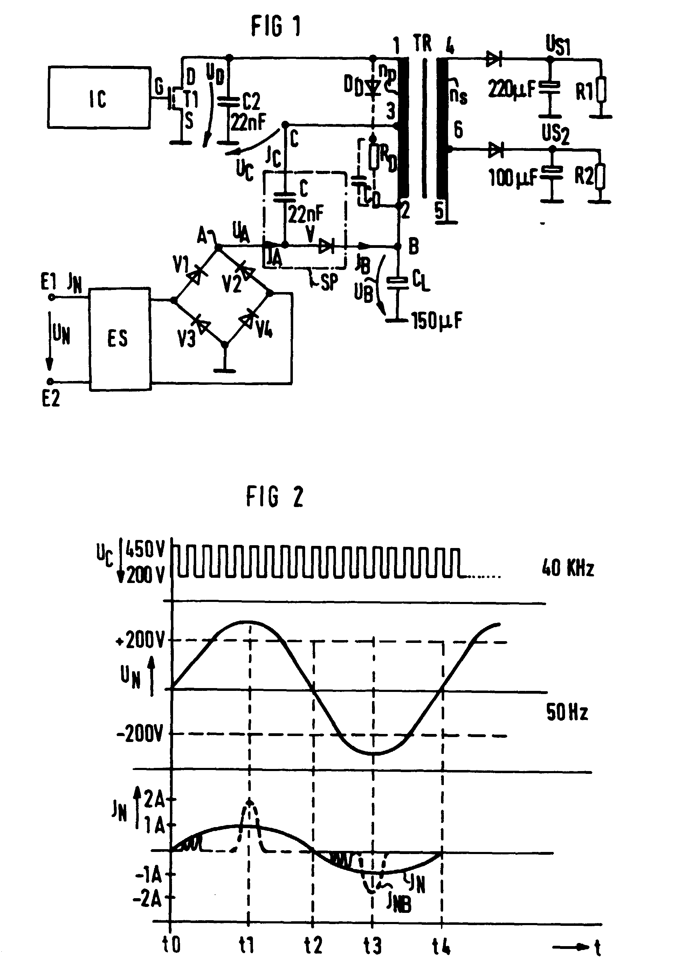

In Figur 1 ist das Prinzipschaltbild eines Sperrwandler-Schaltnetzteiles mit sinusförmiger Stromaufnahme nach einer ersten Ausführungsform dargestellt. Das Sperrwandler-Schaltnetzteil enthält einen Transformator TR mit einer Klemmen 1, 2 und 3 aufweisenden Primärwicklung $n_P$. Die Primärwicklung n liegt dabei zwischen den Klemmen 1 und 2, während die noch weiter unten detailliert beschriebene Klemme 3 beispielsweise ein Mittelabgriff der Primärwicklung $n_P$ ist. Sekundärseitig weist der Transformator TR eine Sekundärwicklung $n_S$ mit Klemmen 4, 5 sowie 6 auf. Die Klemme 5 liegt auf Bezugspotential, während die Klemmen 4 und 6 jeweils an einen Einweggleichrichter geschaltet sind, an deren Ausgängen jeweils eine Last R1 und R2 liegt. Die Ausbildung der Sekundärseite des Transformators TR kann beliebig gewählt werden, je nachdem, wieviel Ausgangsspannungen das Sperrwandler-Schaltnetzteil zur Verfügung stellen soll und wie groß die entsprechenden sekundärseitigen Ausgangsspannungen $U_{S1}$, $U_{S2}$ sein sollen. Anstatt einer einzigen sekundärseitigen Wicklung $n_S$ können sekundärseitig auch mehrere Sekundärwicklungen vorgesehen werden.

Das Sperrwandler-Schaltnetzteil weist weiter ein Halbleiterschaltelement T1, vorzugsweise einen MOS-Transistor, zum getakteten Anlegen einer von einem Brückengleichrichter V1, V2, V3, V4 gleichgerichteten und von einem Glättungskondensator $C_L$ geglätteten Wechselspannung $U_N$ an die Primärwicklung $n_P$ des Transformators TR auf. Dazu ist der Brückengleichrichter V1, V2, V3, V4 mit seinen Eingangsklemmen vorzugsweise über ein Entstörfilter ES an Klemmen E1, E2 einer Netzwechselspannung $U_N$ angeschlossen. Die Netzwechselspannung $U_N$ kann beispielsweise 220 Volt betragen.

Am Ausgang des Brückengleichrichters V1, V2, V3, V4 ist eine gleichgerichtete Ausgangsspannung $U_A$ abgreifbar, und zwar zwischen dem Verbindungspunkt der Dioden V1 und V2 und dem Verbindungspunkt der Dioden V3 und V4, der auf Bezugspotential liegt. Der Verbindungspunkt der Dioden V1 und V2, also deren Kathodenanschlüsse sind erfindungsgemäß über eine Gleichrichteranordnung an eine Klemme des Glättungskondensators $C_L$ angeschlossen, dessen andere Klemme auf Bezugspotential liegt. Die Gleichrichteranordnung ist vorzugsweise eine Diode V, deren Anodenanschluß mit den Kathodenanschlüssen der Dioden V1, V2 des Brückengleichrichters V1, V2, V3, V4 und deren Kathodenanschluß mit dem Glättungskondensator $C_L$ in Verbindung steht. Der Verbindungspunkt der Diode V und des Glättungskondensators $C_L$ ist mit der Klemme 2 der Primärwicklung $n_P$ in Verbindung. Die Klemme 1 der Primärwicklung $n_P$ ist über die Laststrecke des Halbleiterschaltelementes T1 an Bezugspotential geschaltet. Im Falle der Verwendung eines MOS-Transistors als Halbleiterschaltelement T1 wird dazu die Klemme 1 der Primärwicklung $n_P$ an einen Drain-Anschluß D des MOS-Transistors angeschlossen und der Source-Anschluß des MOS-Transistors auf Bezugspotential gelegt. Parallel zur Laststrecke des Halbleiterschaltelementes T1 ist noch eine Kapazität C2 geschaltet. Angesteuert wird das Halbleiterschaltelement T1 über dessen Steueranschluß, im Falle eines MOS-Transistors dessen Gate-Anschluß G, von einer Steuereinrichtung IC.

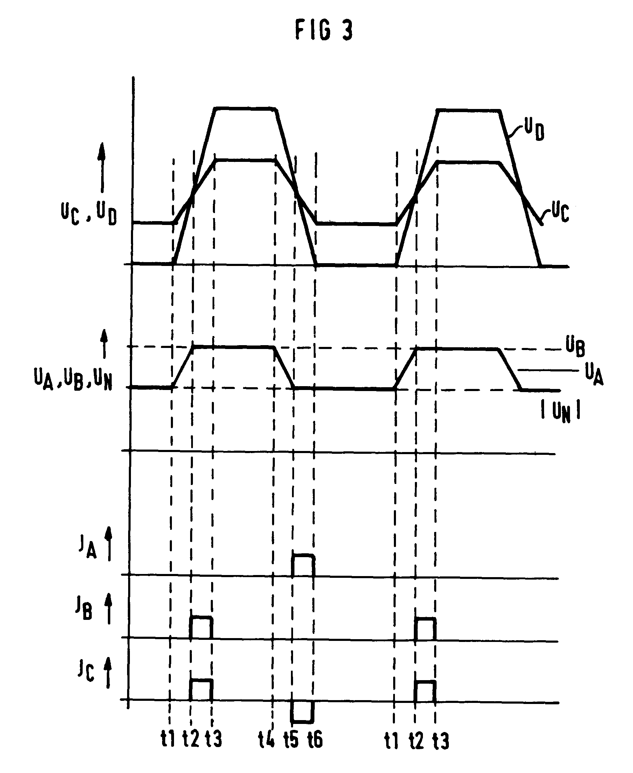

Erfindungsgemäß weist die Schaltungsanordnung von Figur 1 noch eine kapazitive Einrichtung, vorzugsweise einen Kondensator C, auf, die zwischen die Klemme 3 der Primärwicklung $n_P$ des Transformators TR und die Kathodenanschlüsse der Dioden V1, V2 des Brückengleichrichters V1, V2, V3, V4 geschaltet ist. Die Anordnung der kapazitiven Einrichtung C und der Gleichrichteranordnung V wirkt als Strompumpe, die vom Brückengleichrichter V1, V2, V3, V4 immer dann Strom aufnimmt, wenn das Halbleiterschaltelement T1 einschaltet und den geladenen Strom an den Glättungskondensator $C_L$ wieder abgibt, wenn der Halbleiterschalter T1 sperrt. Die Wirkungsweise des Schaltnetzteiles nach Figur 1 wird im Zusammenhang mit den Figuren 2 und 3 nachfolgend eingehend erläutert.

Die Schaltungsanordnung von Figur 1 weist zwar noch eine Bedämpfungsschaltung $D_D$, $R_D$ sowie $C_D$ in Form einer Diode in Serienschaltung mit einer Parallelschaltung eines Widerstandes mit einer Kapazität auf, die zwischen die Klemmen 1 und 2 der Primärwicklung $n_P$ des Transformators TR geschaltet ist. Diese Schaltelemente sind nur strichliert eingezeichnet, da im Rahmen der vorliegenden Erfindung auf eine derartige Bedämpfungsschaltung verzichtet werden kann. Durch die Strompumpe in Form der kapazitiven Einrichtung C und der Gleichrichteranordnung V, können nämlich die Überschwinger des Schaltnetzteiles wirksam bedämpft werden.

In Figur 1 sind Spannungen und Ströme eingezeichnet, deren Verläufe in den Figuren 2 und 3 erläutert und für das Verständnis der Erfindung von Bedeutung sind. Mit $U_N$ ist die Netzwechselspannung an den Klemmen E1, E2 und mit $I_N$ der an diesen Klemmen E1, E2 entnommene Strom bezeichnet. Mit $U_A$ ist die Spannung an den Ausgangsklemmen des Brückengleichrichters V1, V2, V3, V4 bezeichnet. $I_A$ bezeichnet den Strom, der zwischen dem Ausgang des Brückengleichrichters V1, V2, V3, V4 und der Strompumpe SP fließt. $I_C$ ist der Strom durch die kapazitive Einrichtung C der Strompumpe SP und $I_B$ der Strom von der Strompumpe SP zum Glättungskondensator $C_L$. Mit $U_C$ ist die Spannung vom Abgriff 3 der Primärwicklung $n_P$ und mit $U_D$ die Spannung an der Laststrecke des Halbleiterschaltelementes T1 bezeichnet.

Im eingeschwungenen Zustand beträgt die Schaltfrequenz des Schaltnetzteiles beispielsweise 40kHz. Die dann am Mittelabgriff 3 der Primärwicklung $n_P$ abgreifbare Spannung $U_C$ hat dann einen Verlauf, wie in Figur 2 oben dargestellt ist. Die Spannung $U_C$ pendelt beispielsweise zwischen 200 und 450 Volt im 40kHz-Takt hin und her. Wird der Abgriff 3 näher an der Klemme 2 der Primärwicklung $n_P$ gewählt, so ist der Spannungshub von $U_C$ kleiner, während der Spannungshub größer ist, wenn der Abgriff 3 näher an der Klemme 1 der Primärwicklung $n_P$ liegt. Wird der Abgriff 3 direkt an der Klemme 1 der Primärwicklung $n_B$ gewählt, so ist die Spannung $U_C$ gleich der Lastspannung $U_D$ des Halbleiterschaltelementes T1. Der Spannungshub wäre dann maximal.

In Figur 2 ist auch der Verlauf der Netzwechselspannung $U_N$ an den Klemmen E1, E2 des Sperrwandler-Schaltnetzteiles dargestellt. Bei einer Netzwechselspannung von 220 Volt und 50Hz Netzwechselfrequenz wechselt die Spannung an den Eingangsklemmen E1, E2 ständig zwischen +310V und -310V mit einer Frequenz von 50Hz hin und her (220V $\cdot\sqrt{2}$).

Darüberhinaus zeigt Figur 2 auch den Stromverlauf $I_N$, der mit dem erfindungsgemäßen Sperrwandler-Schaltnetzteil der Wechselspannungsquelle entnommen wird. Dieser Strom ist in Figur 2 als durchgezogene Linie bezeichnet. In Wirklichkeit ist dieser Strom $I_N$ im 40kHz-Takt unterbrochen, wobei allerdings die Hüllkurve dieses Stromes den durchgezogenen Verlauf annimmt. Die strichlierte Kurve $I_{NB}$ zeigt dagegen die Hüllkurve des Stromes, wie er bei Sperrwandler-Schaltnetzteilen nach dem bisherigen Stand der Technik üblich war.

Während des größten Teils einer Wechselspannungsperiode ist der Betrag des Momentanwerts der Netzspannung $U_N$ kleiner als die Spannung $U_B$ am Glättungskondensator $C_L$. Bei den bekannten Sperrwandler-Schaltnetzteilen ohne Strompumpe wurde der Wechselspannungsquelle jedoch nur dann Strom entzogen, wenn der Betrag des Momentanwertes der Netzspannung $U_N$ größer war als die Spannung $U_B$ am Glättungskondensator $C_L$. Dies führte dazu, daß nur eine kurzzeitige Strombelastung der Wechselspannungsquelle eintrat, und von einer sinusförmigen Stromaufnahme nicht die Rede sein konnte, wie die strichlierte Kurve $I_{NB}$ deutlich zeigt.

Die sinusförmige Stromaufnahme, wie sie in Figur 2 dargestellt ist, erklärt sich bei einem erfindungsgemäßen Sperrwandler-Schaltnetzteil nach Figur 1. Wenn aus den in Figur 3 zeitlich dargestellten Verläufen der Spannungen $U_C$, $U_D$, der Spannungen $U_A$, $U_B$ sowie $U_N$ und der Ströme $I_A$, $I_B$ sowie $I_C$. Zwischen den Zeitpunkten t1 und t3 steigt die Spannung $U_C$, nach dem Sperren des Halbleiterschaltelementes T1 zum Zeitpunkt t1 an. Die Spannung $U_A$ wird über die kapazitive Einrichtung C ebenfalls angehoben, bis im Zeitpunkt t2 die Gleichrichteranordnung V leitend wird. Die Spannung $U_A$ bleibt auf der Höhe der Spannung $U_B$ stehen. Zwischen den Zeitpunkten t2 und t3 wird der Glättungskondensator $C_L$

über die kapazitive Einrichtung C und die Gleichrichteranordnung V mit einem Strom $I_C = I_B$ aufgeladen. Nach dem Entladen der Energie des Transformators TR zwischen den Zeitpunkten t3 und t4 auf die Sekundärseite, fällt zwischen den Zeitpunkten t4 und t6 die Spannung $U_C$ durch die Rücklaufschwingung wieder ab, ebenso die Spannung $U_A$ über die kapazitive Einrichtung C. Zum Zeitpunkt t5 hat die Spannung $U_A$ den Momentanwert von $|U_N|$ erreicht, bleibt stehen und der Brückengleichrichter V1, V2, V3 und V4 wird leitend. Dies heißt, daß der Strom $I_A$ gleich -$I_C$ wird. Zwischen den Zeitpunkten t5 und t6 wird Energie aus dem Stromnetz in der kapazitiven Einrichtung C zwischengespeichert.

Im Zeitpunkt t6 erreicht die Spannung $U_D$ des Halbleiterschaltelementes T1 den Wert 0 und das Halbleiterschaltelement T1 wird rückwärts leitend über die ohnehin im Halbleiterschaltelement vorhandene Inversdiode. Das Halbleiterschaltelement T1 wird während der Rückleitphase durch die Ansteuereinrichtung IC (z.B. eine integrierte Schaltungsanordnung von Siemens mit der Bezeichnung TDA 4605) eingeschaltet. Im Zeitpunkt t1 ist der Transformator TR wieder magnetisiert und es beginnt eine neue Schaltperiode, so daß das Halbleiterschaltelement T1 durch die Ansteuerschaltung IS wieder gesperrt werden kann.

Aus Figur 3 ist deutlich zu ersehen, das die kapazitive Einrichtung C als Zwischenspeicher für den Strom $I_C$ dient, der zwischen den Zeitpunkten t5 und t6 gespeichert und zwischen den Zeitpunkten t2 und t3 an den Glättungskondensator $C_L$ abgegeben wird. Während des größten Teils einer Netzspannungsperiode ist - wie eingangs erwähnt - der Betrag des Momentanwerts der Netzspannung $U_N$ kleiner als die Spannung $U_B$ am Glättungskondensator $C_L$. Durch die erfindungsgemäße Schaltungsanordnung wird auch während diesen Zeiten ein Stromfluß möglich, der schließlich die sinusförmige Stromaufnahme des Schaltnetzteils ermöglicht.

Die Wirkung der Strompumpe SP kann durch die Dimensionierung der kapazitiven Einrichtung C beliebig zwischen voller Wirkung und keiner Wirkung (C = 0) eingestellt werden. Vorzugsweise wird die kapazitive Einrichtung C und der parallel zum Halbleiterschaltelement T1 geschaltete Kondensator C2 etwa gleich groß dimensioniert, und zwar im nF-Bereich. Diese Kapazitäten beeinflussen auch die Schwingfrequenz des Schaltnetzteils. Es ergibt sich ein Übergang zum Resonanzwandler mit größer werdenden Kapazitäten der kapazitiven Einrichtung C und des Kondensators C2.

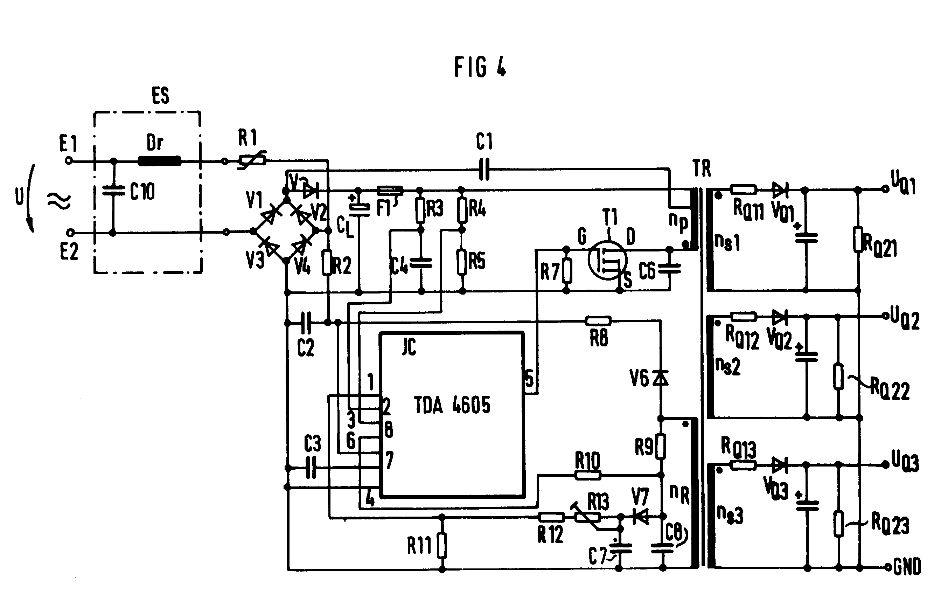

In einer praktischen Ausführung gemäß Figur 4 ist das Entstörnetzwerk ES als zwischen die Klemmen E1, E2 geschalteter Kondensator C10 mit einer Drossel Dr im Längszweig realisiert. Die Drossel Dr bewirkt wegen der Stetigkeit des durch sie fließenden Stromes eine weitere Verbesserung im Hinblick auf eine möglichst sinusförmige Stormaufnahme.

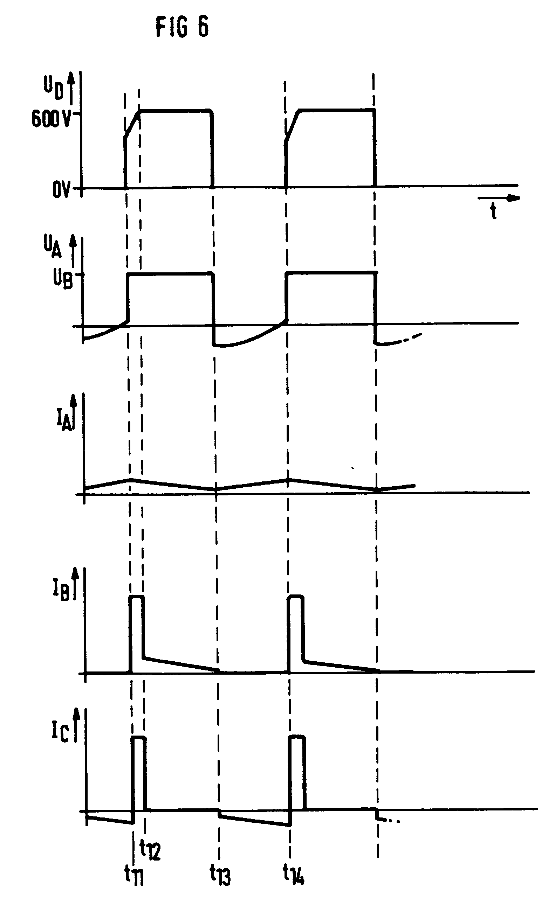

In der Figur 5 ist ein erfindungsgemäßes Sperrwandler-Schaltnetzteil in einer zweiten Ausführungsform gezeigt. Die Strompumpe SP ist mit dem Anschluß 1 der Primärwicklung $n_P$ verbunden, an den auch der Drainanschluß des Schalttransistors T1 angeschlossen ist. Zwischen den Ausgangsanschluß 20 des Brückengleichrichters zum Abgriff der positiven Spannung und den Anschluß 22 der Strompumpe SP ist eine Drossel L1 geschaltet. Entsprechend ist zwischen dem Anschluß 21 des Brückengleichrichters und dem mit Masse verbundenen Anschluß des Glättungskondensators eine Drossel L2 geschaltet. Beide Drosseln L1, L2 sind gegensinnig gekoppelt, d. h., daß die in beiden Drosseln induzierten Magnetfelder sich gleichsinnig überlagern, wenn jeweils der gleichgroße, entgegengesetzt gerichtete Strom durch sie fließt. Die Schaltung nach Figur 5 benötigt wie das Schaltnetzteil der Figur 1 keine Snubber-Schaltung, also weder die Bauelemente $D_D$, $R_D$, $C_D$. Außerdem wird hier kein zur Laststrecke des Schalttransistors T1 parallel geschalteter Kondensators C2 benötigt.

Die Funktion der Schaltung gemäß Figur 5 wird nun im Zusammenhang mit den für einen Momentanwert der Netzspannung $U_N$ dargestellten Strom- und Spannungsverläufen der Figur 6 beschrieben. Die auch in der Figur 1 angegebenen Spannungen $U_D$, $U_A$, $I_{A,B,C}$ sind an den jeweils entsprechenden Stellen abgegriffen. Zum Zeitpunkt t11 wird der Schalttransistor durch die Steuerungseinrichtung IC gesperrt. Die Ein- und Ausschaltzeitpunkte des Transistors T1 werden durch die Steuerungseinrichtung IC nach Maßgabe des Primärstroms und der Sekundärspannung festgelegt. Unmittelbar nach dem Sperren des Schalttransistors T1 steigt dessen Drainspannung $U_D$ steil an. Dieser Spannungssprung wird längs des Kondensators C der Strompumpe SP auch auf den Knoten 22 übertragen. Wenn die Spannung $U_A$ am Knoten 22 den Wert der Spannung $U_B$, die längs des Glättungskondensators $C_L$ abfällt, erreicht, wird die Spannung $U_A$ auf $U_B$ geklemmt. Der Kondensator C liegt dann zur Primärwicklung $n_P$ parallel. Er wird über den Strom $I_C$ entladen, der ein Teil des Ladestroms $I_B$ für den Glättungskondensator $C_L$ bildet. Während der Entladezeit des Kondensators C verläuft der Anstieg der Spannung $U_D$ verlangsamt. Aufgrund der Stetigkeit des Stroms $I_A$ durch die Drossel L1 wird weiterhin aus dem Brückengleichrichter V1...V4 Strom gezogen. Dieser Strom liefert den anderen Beitrag zum Ladestrom $I_B$ des Glättungskondensators $C_L$. Da die Spannung des Knotens 22 ansteigt, nimmt der Strom $I_A$ mit der Zeit ab. Die im Kondensator C und in der Drossel L1 gespeicherten Energien werden also während der Ausschaltphase des Transistors T1 in den Glättungskondensator $C_L$ übertragen. Ab dem Zeitpunkt t12, wenn die im Kondensator C gespeicherte Ladung abgegeben wurde, bleibt die Spannung $U_D$ konstant. Der Strom $I_B$ ist dann gleich dem Strom $I_A$.

Zum Zeitpunkt t13 wird der Schalttransistor T1 über die Steuerungseinrichtung IC leitend geschaltet. Der Drainanschluß des Transistors T1 wird mit Masse verbunden, so daß die Spannung $U_D$ nunmehr 0 V beträgt. Der gleichgroße Spannungssprung wird über den Kondensator C auf den Knoten 22 übertragen, so daß dessen Spannung bezogen auf Masse auch negativ sein kann. Die Diode V der Strompumpe SP ist dann gesperrt, der Strom $I_B$ ist demzufolge Null. Wegen der Stetigkeit des Stroms durch die Drossel L1 fließt der Strom $I_A$ weiter und lädt den Kondensator C auf. Durch das bezüglich des Ausgangs 20 des Brückengleichrichters negative Potential des Knotens 22 steigt der Strom $I_A$ mit der Zeit an. Auch die Spannung $U_A$ steigt gemäß der Ladekennlinie des Kondensators C. Mit dem Abschalten des Transistors T1 zum Zeitpunkt t14 beginnt der beschriebene Zyklus von neuem.

Die Drossel L1 sorgt dafür, daß aus dem Brückengleichrichter V1...V4 ein stetiger Strom $I_A$ gezogen wird. Gemäß der Regelung der Steuerungseinrichtung IC nimmt die Einschaltdauer des Transistors T1 mit abnehmendem Effektivwert der Netzspannung $U_N$ oder zunehmender Sekundärlast zu. Der Strom durch die Drossel nimmt mit zunehmender Einschaltdauer während der Einschaltphase zu. Ebenso erhöht sich in diesem Fall die Stromaufnahme der Strompumpe. Bei abnehmendem Effektivwert der Netzspannung und zunehmender Sekundärlast erhöht sich also auch die Wirkung der Strompumpe. Demzufolge ist die Stromaufnahme aus dem Netz noch weiter angenähert an die Sinusform und die Rückwirkung von Stromoberwellen in das Versorgungsnetz noch weiter verringert.

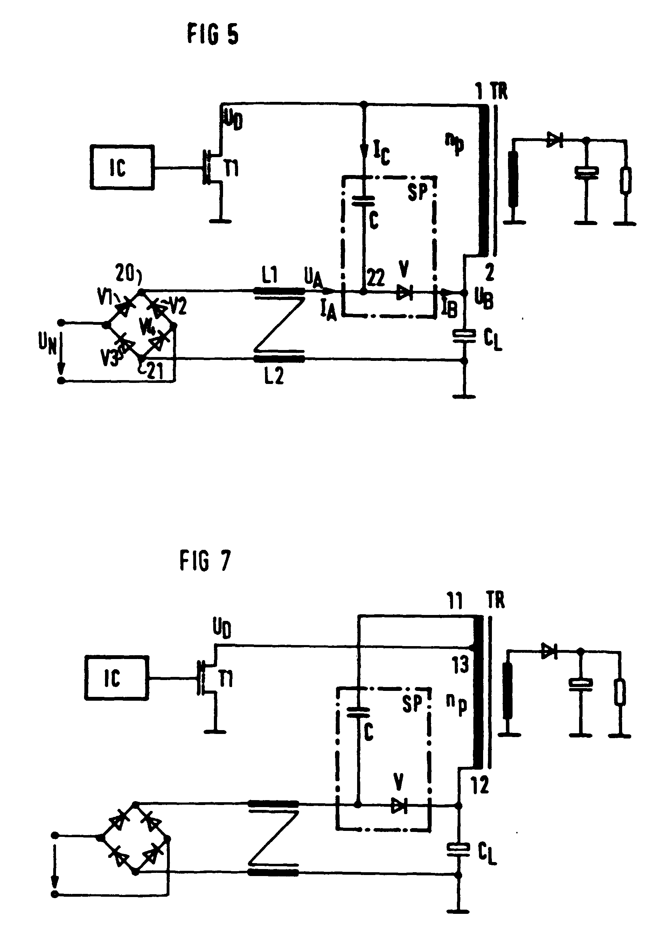

Die Stromaufnahme ist gerade dann möglichst sinusförmig, wenn der Spannungshub am Knoten 22 etwa gleich dem Scheitelwert der Netzspannung ist. Es hat sich gezeigt, daß aufgrund der parasitären Wirkung der Bauelemente der Spannungshub am Knoten 22 geringfügig kleiner als der Scheitelwert der Netzspannung ist. Um dies zu kompensieren, ist gemäß Figur 7 vorgesehen, den Kondensator 10 der Strompumpe SP an einen Wicklungsanschluß 11 der Primärwicklung $n_P$ anzuschließen, der außerhalb deren Anschlüsse 12, 13 für den Glättungskondensator $C_L$ bzw. den Schalttransistor T1 liegt. Dadurch wird der Hub am Knoten 22 vergrößert. Durch die geeignete Wahl des Abgriffs kann der Spannungshub in der Größe des Scheitelwerts der Netzspannung eingestellt werden.

In den Schaltungen der Figuren 5, 7 werden Überschwinger der Drainspannung $U_D$ des Schalttransistors T1 nach oben unmittelbar nach dem Abschalten des Transistors durch den Kondensator der Strompumpe SP wirkungsvoll abgeschnitten. Es ist demzufolge keine Snubber-Schaltung notwendig. Außerdem kann auf einen sonst üblicherweise parallel zur Drain-Source-Strecke des Schalttransistors T1 geschalteten Kondensator verzichtet werden. Dadurch ist auch das Einschalten des Schalttransistors T1 zu jeder Zeit möglich, also unabhängig vom Wert der Sekundärspannung.

## Patentansprüche

### Patentansprüche für folgende Vertragsstaaten : DE, ES, FR, IT

1. Sperrwandler-Schaltnetzteil zur sinusförmigen Stromaufnahme mit einem Halbleiterschaltelement (T1) zum getakteten Anlegen einer von einem Brückengleichrichter (V1...V4) gleichgerichteten und einem Glättungskondensator ($C_L$) geglätteten Wechselspannung ($U_N$) an eine Primärwicklung (np) eines Transformators (TR), mit einer Steuereinrichtung (IC) zum Ansteuern des Halbleiterschaltelementes (T1) und mit einer Strompumpe (SP), die mit dem Brückengleichrichter (V1...V4) verbunden ist,
**dadurch gekennzeichnet,**
daß die Strompumpe (SP) eine kapazitive Einrichtung (C) und eine Gleichrichteranordnung (V) umfaßt, daß die Gleichrichteranordnung (V) zwischen den Brückengleichrichter (V1...V4) und den Glättungskondensator geschaltet ist und daß die kapazitive Einrichtung (C) zwischen einen mit dem Brückengleichrichter (V1...V4) gekoppelten Anschluß der Gleichrichteranordnung (V) und einen Anschluß der Primärwicklung (np) geschaltet ist.

2. Sperrwandler-Schaltnetzteil nach Anspruch 1,
**dadurch gekennzeichnet,**
daß die Gleichrichteranordnung (V) eine Diode enthält, die einen Anodenanschluß aufweist, der mit einem Ausgangsanschluß (A, 20) des Brückengleichrichters (V1...V4) gekoppelt ist, an dem eine positive Spannung abgreifbar ist, und einen Kathodenanschluß, der an einen Anschluß (B) des Glättungskondensators ($C_L$) angeschlossen ist, daß die kapazitive Einrichtung (C) einen ersten Anschluß aufweist, der mit dem Ausgangsanschluß (A, 20) des Brückengleichrichters (V1...V4) gekoppelt ist, und einen zweiten Anschluß, der mit einem Anschluß (1, 3, 11) des Transformators (TR) verbunden ist, an dem eine zu einer an der Laststrecke des Halbleiterschaltelementes (T1) abgreifbaren Spannung ($U_D$) gleichsinnige und proportionale Spannung ($U_C$) abgreifbar ist.

3. Sperrwandler-Schaltnetzteil nach Anspruch 2,
**dadurch gekennzeichnet,**
daß die Primärwicklung (np) des Transformators (TR) eine erste Abgriffsklemme (1) aufweist, die mit der Laststrecke des Halbleiterschaltelements (T1) verbunden ist, eine zweite Abgriffsklemme (2), die mit dem Anschluß (B) des Glättungskondensators ($C_L$) verbunden ist und eine dritte Abgriffsklemme (3), die mit dem zweiten Anschluß der kapazitiven Einrichtung (C) verbunden ist und die zwischen den ersten und zweiten Abgriffsklemmen (1, 2) an die Primärwicklung (np) angeschlossen ist.

**4.** Sperrwandler-Schaltnetzteil nach Anspruch 2,
**dadurch gekennzeichnet,**
daß der Ausgangsanschluß (20) des Brückengleichrichters (V1...V4) über eine Drossel (L1) mit der Strompumpe (SP) verbunden ist.

**5.** Sperrwandler-Schaltnetzteil nach Anspruch 4,
**dadurch gekennzeichnet,**
daß die Primärwicklung (np) des Transformators (TR) eine erste Abgriffsklemme (11) aufweist, die mit dem zweiten Anschluß der kapazitven Einrichtung (C) verbunden ist, eine zweite Abgriffsklemme (12), die mit dem Anschluß des Glättungskondensators ($C_L$) verbunden ist, und eine dritte Abgriffsklemme (13), die mit der Laststrecke des Halbleiterschaltelements (T1) verbunden ist und die zwischen den ersten und zweiten Abgriffsklemmen (11, 12) an die Primärwicklung angeschlossen ist.

**6.** Sperrwander-Schaltnetzteil nach einem der Ansprüche 2 oder 4,
**dadurch gekennzeichnet,**
daß die Primärwicklung (np) des Transformators (TR) eine erste Abgriffsklemme (1) aufweist, die mit der Laststrecke des Halbleiterschaltelements (T1) verbunden ist und mit dem zweiten Anschluß der kapazitven Einrichtung (C), und eine zweite Abgriffsklemme (2), die mit dem Anschluß (B) des Glättungskondensators ($C_L$) verbunden ist.

**7.** Sperrwander-Schaltnetzteil nach einem der Ansprüche 1 bis 6,
**dadurch gekennzeichnet,**
daß die kapazitive Einrichtung (C) einen Kondensator enthält.

**8.** Sperrwander-Schaltnetzteil nach einem der Ansprüche 1 bis 7,
**dadurch gekennzeichnet,**
daß dem Brückengleichrichter (V1...V4) ein Entstörnetzwerk (ES) vorgeschaltet ist, das mindestens eine Drossel (Dr) enthält.

**9.** Sperrwandler-Schaltnetzteil nach einem der Ansprüche 1 bis 8,
**dadurch gekennzeichnet,**
daß die kapazitive Einrichtung (C) einen Kondensator mit einer Kapazität im nF-Bereich enthält.

**10.** Verwendung der Strompumpe (SP) in einem Sperrwandler-Schaltnetzteil nach einem der Ansprüche 1 bis 9 zur Bedämpfung von Überschwingen beim Ein- und Ausschalten des Halbleiterschaltelementes (T1).

**Patentansprüche für folgenden Vertragsstaat : GB**

**1.** Sperrwandler-Schaltnetzteil zur sinusförmigen Stromaufnahme mit einem Halbleiterschaltelement (T1) zum getakteten Anlegen einer von einem Brückengleichrichter (V1...V4) gleichgerichteten und einem Glättungskondensator ($C_L$) geglätteten Wechselspannung ($U_N$) an eine Primärwicklung (np) eines Transformators (TR), mit einer Steuereinrichtung (IC) zum Ansteuern des Halbleiterschaltelementes (T1) und mit einer Strompumpe (SP), die eine kapazitive Einrichtung (C) und eine Gleichrichteranordnung (V) umfaßt, wobei die Gleichrichteranordnung (V) zwischen den Brückengleichrichter (V1...V4) und den Glättungskondensator geschaltet ist und die kapazitive Einrichtung (C) zwischen einen mit dem Brückengleichrichter (V1...V4) gekoppelten Anschluß der Gleichrichteranordnung (V) und einen Anschluß der Primärwicklung (np) geschaltet ist,
**dadurch gekennzeichnet, das**
die Strompumpe (SP) mit dem Brückengleichrichter (V1...V4) unmittelbar verbunden ist.

**2.** Sperrwandler-Schaltnetzteil nach Anspruch 1,
**dadurch gekennzeichnet,**
daß die Gleichrichteranordnung (V) eine Diode enthält, die einen Anodenanschluß aufweist, der an einen Ausgangsanschluß (A) des Brückengleichrichters (V1...V4) angeschlossen ist, an dem eine positive Spannung abgreifbar ist, und einen Kathodenanschluß, der an einen Anschluß (B) des Glättungskondensators ($C_L$) angeschlossen ist, daß die kapazitive Einrichtung (C) einen ersten Anschluß aufweist, der an den Ausgangsanschluß (A) des Brückengleichrichters (V1...V4) angeschlossen ist, und einen zweiten Anschluß, der mit einem Anschluß (1, 3, 11) des Transformators (TR) verbunden ist, an dem eine zu einer an der Laststrecke des Halbleiterschaltelementes (T1) abgreifbaren Spannung ($U_D$) gleichsinnige und proportionale Spannung ($U_C$) abgreifbar ist.

**3.** Sperrwandler-Schaltnetzteil nach Anspruch 2,
**dadurch gekennzeichnet,**
daß die Primärwicklung (np) des Transformators (TR) eine erste Abgriffsklemme (1) aufweist, die mit der Laststrecke des Halbleiterschaltelements (T1) verbunden ist, eine zweite Abgriffsklemme (2), die mit dem Anschluß (B) des Glättungskondensators ($C_L$) verbunden ist und eine dritte Abgriffsklemme (3), die mit dem zweiten Anschluß der kapazitiven Einrichtung (C) verbunden ist und die zwischen den ersten und zweiten Abgriffsklemmen (1, 2) an die Primärwicklung (np) angeschlossen ist.

**4.** Sperrwandler-Schaltnetzteil nach Anspruch 2,
**dadurch gekennzeichnet,**

daß die Primärwicklung (np) des Transformators (TR) eine erste Abgriffsklemme (11) aufweist, die mit dem zweiten Anschluß der kapazitven Einrichtung (C) verbunden ist, eine zweite Abgriffsklemme (12), die mit dem Anschluß des Glättungskondensators (C$_L$) verbunden ist, und eine dritte Abgriffsklemme (13), die mit der Laststrecke des Halbleiterschaltelements (T1) verbunden ist und die zwischen den ersten und zweiten Abgriffsklemmen (11, 12) an die Primärwicklung angeschlossen ist.

5. Sperrwander-Schaltnetzteil nach Anspruch 2, **dadurch gekennzeichnet,** daß die Primärwicklung (np) des Transformators (TR) eine erste Abgriffsklemme (1) aufweist, die mit der Laststrecke des Halbleiterschaltelements (T1) verbunden ist und mit dem zweiten Anschluß der kapazitven Einrichtung (C), und eine zweite Abgriffsklemme (2), die mit dem Anschluß (B) des Glättungskondensators (C$_L$) verbunden ist.

6. Sperrwander-Schaltnetzteil nach einem der Ansprüche 1 bis 5, **dadurch gekennzeichnet,** daß die kapazitive Einrichtung (C) einen Kondensator enthält.

7. Sperrwander-Schaltnetzteil nach einem der Ansprüche 1 bis 6, **dadurch gekennzeichnet,** daß dem Brückengleichrichter (V1...V4) ein Entstörnetzwerk (ES) vorgeschaltet ist, das mindestens eine Drossel (Dr) enthält.

8. Sperrwandler-Schaltnetzteil nach einem der Ansprüche 1 bis 9, **dadurch gekennzeichnet,** daß die kapazitive Einrichtung (C) einen Kondensator mit einer Kapazität im nF-Bereich enthält.

9. Verwendung der Strompumpe (SP) in einem Sperrwandler-Schaltnetzteil nach einem der Ansprüche 1 bis 8 zur Bedämpfung von Überschwingen beim Ein- und Ausschalten des Halbleiterschaltelementes (T1).

**Claims**

**Claims for the following Contracting States : DE, ES, FR, IT**

1. Flyback converter switched-mode power supply for sinusoidal power consumption, having a semiconductor switching element (T1) for the clocked appliance of an AC voltage (U$_N$), rectified by a bridge rectifier (V1...V4) and smoothed by a smoothing capacitor (C$_L$), to a primary winding (n$_p$) of a transformer (TR), having a control device (IC) for triggering the semiconductor switching element (T1), and having a current pump (SP) which is connected to the bridge rectifier (V1...V4), characterized in that the current pump (SP) comprises a capacitive device (C) and a rectifier arrangement (V), in that the rectifier arrangement (V) is connected between the bridge rectifier (V1...V4) and the smoothing capacitor, and in that the capacitive device (C) is connected between a terminal, coupled to the bridge rectifier (V1...V4), of the rectifier arrangement (V) and a terminal of the primary winding (n$_p$).

2. Flyback converter switched-mode power supply according to Claim 1, characterized in that the rectifier arrangement (V) includes a diode which has an anode terminal which is coupled to an output terminal (A, 20) of the bridge rectifier (V1...V4) at which a positive voltage can be tapped, and a cathode terminal which is connected to a terminal (B) of the smoothing capacitor (C$_L$), and in that the capacitive device (C) has a first terminal which is coupled to the output terminal (A, 20) of the bridge rectifier (V1...V4), and a second terminal, which is connected to a terminal (1, 3, 11) of the transformer (TR) at which it is possible to tap a voltage (U$_C$) which is of the same sense as and in proportion to a voltage (U$_D$) which can be tapped at the load section of the semiconductor switching element (T1).

3. Flyback converter switched-mode power supply according to Claim 2, characterized in that the primary winding (n$_p$) of the transformer (TR) has a first tapping terminal (1), which is connected to the load section of the semiconductor switching element (T1), a second tapping terminal (2), which is connected to the terminal (B) of the smoothing capacitor (C$_L$), and a third tapping terminal (3), which is connected to the second terminal of the capacitive device (C) and is connected to the primary winding (n$_p$) between the first and second tapping terminals (1, 2).

4. Flyback converter switched-mode power supply according to Claim 2, characterized in that the output terminal (20) of the bridge rectifier (V1..V4) is connected to the current pump (SP) via an inductor (L1).

5. Flyback converter switched-mode power supply according to Claim 4, characterized in that the primary winding (n$_p$) of the transformer (TR) has a first tapping terminal (11), which is connected to the second terminal of the capacitive device (C), a second tapping terminal (12), which is connected to the terminal of the smoothing capacitor (C$_L$), and a third tapping terminal (13), which is connected to the load section of the semiconductor switching element (T1), and which is connected to the primary winding between the first and second tapping terminals (11, 12).

6. Flyback converter switched-mode power supply according to one of Claims 2 or 4, characterized in that the primary winding ($n_p$) of the transformer (TR) has a first tapping terminal (1), which is connected to the load section of the semiconductor switching element (T1) and to the second terminal of the capacitive device (C), and a second tapping terminal (2), which is connected to the terminal (B) of the smoothing capacitor ($C_L$).

7. Flyback converter switched-mode power supply according to one of Claims 1 to 6, characterized in that the capacitive device (C) includes a capacitor.

8. Flyback converter switched-mode power supply according to one of Claims 1 to 7, characterized in that connected upstream of the bridge rectifier (V1...V4) is an interference-suppression network (ES) which includes at least one inductor (Dr).

9. Flyback converter switched-mode power supply according to one of Claims 1 to 8, characterized in that the capacitive device (C) includes a capacitor with a capacitance in the nF range.

10. The use of the current pump (SP) in a flyback converter switched-mode power supply according to one of Claims 1 to 9, for the purpose of damping overshooters during turning the semiconductor switching element (T1) on and off.

**Claims for the following Contracting State : GB**

1. Flyback converter switched-mode power supply for sinusoidal power consumption, having a semiconductor switching element (T1) for the clocked appliance of an AC voltage ($U_N$), rectified by a bridge rectifier (V1...V4) and smoothed by a smoothing capacitor ($C_L$), to a primary winding ($n_p$) of a transformer (TR), having a control device (IC) for triggering the semiconductor switching element (T1), and having a current pump (SP) which has a capacitive device (C) and a rectifier arrangement (V), the rectifier arrangement (V) being connected between the bridge rectifier (V1..V4) and the smoothing capacitor, and the capacitive device (C) being connected between a terminal, coupled to the bridge rectifier (V1..V4), of the rectifier arrangement (V) and a terminal of the primary winding ($n_p$), characterized in that the current pump (SP) is connected directly to the bridge rectifier (V1...V4).

2. Flyback converter switched-mode power supply according to Claim 1, characterized in that the rectifier arrangement (V) includes a diode which has an anode terminal which is coupled to an output terminal (A) of the bridge rectifier (V1...V4) at which a positive voltage can be tapped, and a cathode terminal which is connected to a terminal (B) of the smoothing capacitor ($C_L$), and in that the capacitive device (C) has a first terminal which is connected to the output terminal (A) of the bridge rectifier (V1...V4), and a second terminal, which is connected to a terminal (1,3,11) of the transformer (TR), at which it is possible to tap a voltge ($U_C$) which is of the same sense as and in proportion to a voltage ($U_D$) which can be tapped at the load section of the semiconductor switching element (TI).

3. Flyback converter switched-mode power supply according to Claim 2, characterized in that the primary winding ($n_p$) of the transformer (TR) has a first tapping terminal (1), which is connected to the load section of the semiconductor switching element (T1), a second tapping terminal (2), which is connected to the terminal (B) of the smoothing capacitor ($C_L$), and a third tapping terminal (3), which is connected to the second terminal of the capacitive device (C) and is connected to the primary winding ($n_p$) between the first and second tapping terminals (1, 2).

4. Flyback converter switched-mode power supply according to Claim 2, characterized in that the primary winding ($n_p$) of the transformer (TR) has a first tapping terminal (11), which is connected to the second terminal of the capacitive device (C), a second tapping terminal (12), which is connected to the terminal of the smoothing capacitor ($C_L$), and a third tapping terminal (13), which is connected to the load section of the semiconductor switching element (T1), and which is connected to the primary winding between the first and second tapping terminals (11, 12).

5. Flyback converter switched-mode power supply according to Claim 2, characterized in that the primary winding ($n_p$) of the transformer (TR) has a first tapping terminal (1), which is connected to the load section of the semiconductor switching element (T1) and to the second terminal of the capacitive device (C), and a second tapping terminal (2), which is connected to the terminal (B) of the smoothing capacitor ($C_L$).

6. Flyback converter switched-mode power supply according to one of Claims 1 to 5, characterized in that the capacitive device (C) includes a capacitor.

7. Flyback converter switched-mode power supply according to one of Claims 1 to 6, characterized in that connected upstream of the bridge rectifier (V1...V4) is an interference-suppression network (ES) which includes at least one inductor (Dr).

8. Flyback converter switched-mode power supply according to one of Claims 1 to 7, characterized in that the capacitive device (C) includes a capacitor with a capacitance in the nF range.

9. The use of the current pump (SP) in a flyback converter switched-mode power supply according to one of Claims 1 to 8, for the purpose of damping overshooters during turning the semiconductor switching element (T1) on and off.

**Revendications**

**Revendications pour les Etats contractants suivants : DE, ES, FR, IT**

1. Alimentation à découpage à accumulation pour une consommation sinusoïdale de courant, comportant un élément (T1) de commutation à semi-conducteur pour l'application cadencée d'une tension alternative (UN) redressée par un redresseur en pont (V1 à V4) et lissée par un condensateur (CL) de lissage à un enroulement primaire (nP) d'un transformateur (TR), comportant un dispositif (IC) de commande de l'élément (T1) de commutation à semi-conducteur et une pompe (SP) de courant, qui est reliée au redresseur en pont (V1 à V4),

    caractérisée en ce que

    la pompe (SP) de courant comprend un dispositif capacitif (C) et un dispositif de redresseur (V), le dispositif (V) de redresseur est branché entre le redresseur en pont (V1 à V4) et le condensateur de lissage et le dispositif capacitif (C) est branché entre une borne du dispositif (V) de redresseur qui est couplée au redresseur (V1 à V4) en pont et une borne de l'enroulement primaire (nP).

2. Alimentation à découpage à accumulation suivant la revendication 1,

    caractérisée en ce que

    le dispositif (V) de redresseur comprend une diode, qui comporte une borne d'anode, qui est couplée à une borne (A, 20) de sortie du redresseur en pont (V1 à V4), d'où une tension positive peut être prélevée, et une borne de cathode, qui est connectée à une borne (B) du condensateur (CL) de lissage, le dispositif capacitif (C) comporte une première borne, qui est couplée à la borne (A, 20) de sortie du redresseur en pont (V1 à V4) et une seconde borne, qui est reliée à une borne (1, 3, 11) du transformateur (TR), d'où peut être prélevée une tension (UC) de même sens qu'une tension (UD) pouvant être prélevée de la section de charge de l'élément (T1) de commutation à semi-conducteur et proportionnelle à celle-ci.

3. Alimentation à découpage à accumulation suivant la revendication 2,

    caractérisée en ce que

    l'enroulement primaire (nP) du transformateur (TR) comporte une première borne (1) de prélèvement, qui est reliée à la section de charge de l'élément (T1) de commutation à semi-conducteur, une seconde borne (2) de prélèvement, qui est reliée à la borne (B) du condensateur (CL) de lissage et une troisième borne (3) de prélèvement, qui est connectée à la seconde borne du dispositif capacitif (C) et qui est connectée entre les première et seconde bornes (1, 2) de prélèvement à l'enroulement primaire (nP).

4. Alimentation à découpage à accumulation suivant la revendication 2,

    caractérisée en ce que

    la borne (20) de sortie du redresseur en pont (V1 à V4) est reliée par l'intermédiaire d'une bobine (L1) à la pompe (SP) de courant.

5. Alimentation à découpage à accumulation suivant la revendication 4,

    caractérisée en ce que

    l'enroulement primaire (nP) du transformateur (TR) comporte une première borne (11) de prélèvement, qui est reliée à la seconde borne du dispositif capacitif (C), une seconde borne (12) de prélèvement, qui est reliée à la borne du condensateur (CL) de lissage et une troisième borne (13) de prélèvement, qui est reliée à la section de charge de l'élément (T1) de commutation à semi-conducteur et qui est connectée entre les première et seconde bornes (11, 12) de prélèvement à l'enroulement primaire.

6. Alimentation à découpage à accumulation suivant l'une des revendications 2 ou 4,

    caractérisée en ce que

    l'enroulement primaire (nP) du transformateur (TR) comporte une première borne (1) de prélèvement, qui est reliée à la section de charge de l'élément (T1) de commutation à semi-conducteur et qui est reliée à la seconde borne du dispositif capacitif (C), et une seconde borne (2) de prélèvement, qui est reliée à la borne (B) du condensateur (CL) de lissage.

7. Alimentation à découpage à accumulation suivant l'une des revendications 1 à 6,

    caractérisée en ce que

    le dispositif capacitif (C) comprend un condensateur.

8. Alimentation à découpage à accumulation suivant l'une des revendications 1 à 7,
caractérisée en ce que
il est branché en amont du redresseur en pont (V1 à V4) un réseau (ES) d'antiparasitage, qui comprend au moins une bobine (Dr).

9. Alimentation à découpage à accumulation suivant l'une des revendications 1 à 8,
caractérisée en ce que
le dispositif capacitif (C) comprend un condensateur ayant une capacité dans le domaine du nF.

10. Utilisation de la pompe (SP) de courant dans une alimentation à découpage à accumulation suivant l'une des revendications 1 à 9, pour amortir des suroscillations lors du branchement et du débranchement de l'élément (T1) de commutation à semi-conducteur.

**Revendications pour l'Etat contractant suivant : GB**

1. Alimentation à découpage à accumulation pour la consommation sinusoïdale de courant, comportant un élément (T1) de commutation à semi-conducteur pour l'application cadencée d'une tension alternative (UN) redressée par un redresseur en pont (V1 à V4) et lissée par un condensateur (CL) de lissage à un enroulement primaire (nP) d'un transformateur (TR), comportant un dispositif (IC) de commande pour la commande de l'élément (T1) de commutation à semi-conducteur et une pompe (SP) de courant, laquelle comprend un dispositif capacitif (C) et un dispositif (V) de redresseur, le dispositif (V) de redresseur étant branché entre le redresseur en pont (V1 à V4) et le condensateur de lissage, et le dispositif capacitif (C) étant branché entre une borne du dispositif (V) de redresseur qui est couplée au redresseur en pont (V1 à V4) et une borne de l'enroulement primaire (nP),
caractérisée en ce que
la pompe (SP) de courant est reliée directement au redresseur en pont (V1 à V4).

2. Alimentation à découpage à accumulation suivant la revendication 1,
caractérisée en ce que
le dispositif (V) de redresseur comprend une diode, qui comporte une borne d'anode qui est connectée à une borne (A) de sortie du redresseur en pont (V1 à V4), de laquelle peut être prélevée une tension positive, et une borne de cathode, qui est connectée à une borne (B) du condensateur (CL) de lissage, le dispositif capacitif (C) comporte une première borne, qui est connectée à la borne (A) de sortie du redresseur en pont (V1 à V4) et une seconde borne, qui est reliée à une borne (1, 3, 11) du transformateur (TR), de laquelle peut être prélevée une tension (UC) de même sens qu'une tension (UD) pouvant être prélevée de la section de charge de l'élément (T1) de commutation à semi-conducteur et proportionnelle à celle-ci.

3. Alimentation à découpage à accumulation suivant la revendication 2,
caractérisée en ce que
l'enroulement primaire (nP) du transformateur (TR) comporte une borne (1) de prélèvement, qui est reliée à la section de charge de l'élément (T1) de commutation à semi-conducteur, une seconde borne (2) de prélèvement, qui est reliée à la borne (B) du condensateur (CL) de lissage et une troisième borne (3) de prélèvement, qui est reliée à la seconde borne du dispositif capacitif (C) et qui est connectée entre les première et seconde bornes (1, 2) de prélèvement à l'enroulement primaire (nP).

4. Alimentation à découpage à accumulation suivant la revendication 2,
caractérisée en ce que
l'enroulement primaire (nP) du transformateur (TR) comporte une première borne (11) de prélèvement, qui est reliée à la seconde borne du dispositif capacitif (C), une seconde borne (12) de prélèvement, qui est reliée à la borne du condensateur (CL) de lissage et une troisième borne (13) de prélèvement, qui est reliée à la section de charge de l'élément (T1) de commutation à semi-conducteur et qui est connectée entre les première et seconde bornes (11, 12) de prélèvement à l'enroulement primaire.

5. Alimentation à découpage à accumulation suivant la revendication 2,
caractérisée en ce que
l'enroulement primaire (nP) du transformateur (TR) comporte une première borne (1) de prélèvement, qui est reliée à la section de charge de l'élément (T1) de commutation à semi-conducteur et qui est reliée à la seconde borne du dispositif capacitif (C), et une seconde borne (2) de prélèvement, qui est reliée à la borne (B) du condensateur (CL) de lissage.

6. Alimentation à découpage à accumulation suivant l'une des revendications 1 à 5,
caractérisée en ce que
le dispositif capacitif (C) comprend un condensateur.

7. Alimentation à découpage à accumulation suivant l'une des revendications 1 à 6,

caractérisée en ce que

un réseau (ES) d'antiparasitage, qui comprend au moins une bobine (Dr), est branché en amont du redresseur (V1 à V4) en pont.

8. Alimentation à découpage à accumulation suivant l'une des revendications 1 à 9,

caractérisée en ce que

le dispositif capacitif (C) comprend un condensateur ayant une capacité du domaine du nF.

9. Utilisation de la pompe (SP) de courant dans une alimentation à découpage à accumulation suivant l'une des revendications 1 à 8, pour amortir des suroscillations lors du branchement et du débranchement de l'élément (T1) de commutation à semi-conducteur.

# FIG 1

# FIG 2

# FIG 3

FIG 4

EP 0 598 197 B1

# FIG 6

# FIG 5

# FIG 7